# FASCICULE DE BREVET EUROPEEN

(11) **EP 3 656 597 B1**
(45) Date de publication et mention de la délivrance du brevet: **14.12.2022**
(21) Numéro de dépôt: 19210676.3
(22) Date de dépôt: 21.11.2019
(51) Int. Cl.: B60K 35/00, B60K 37/06, B64D 43/00, G08G 5/00, B64D 11/00

(54) **SYSTÈME D'AFFICHAGE ÉLECTRONIQUE D'IMAGES POUR POSTE DE PILOTAGE DE VÉHICULE AVEC SURFACE D'AFFICHAGE TRIDIMENSIONNELLE**
ELEKTRONISCHES BILDANZEIGESYSTEM FÜR FÜHRERSTAND EINES FAHRZEUGS MIT 3D-ANZEIGEOBERFLÄCHE
SYSTEM FOR ELECTRONIC DISPLAY OF IMAGES FOR STATION FOR CONTROLLING A VEHICLE WITH THREE-DIMENSIONAL DISPLAY SURFACE

(30) Priorité: 23.11.2018 FR 1871765
(43) Date de publication de la demande: 27.05.2020
(73) Titulaire: Thales, 92400 Courbevoie (FR)
(72) Inventeur: BECOUARN, Loïc, 33700 MERIGNAC (FR); MENNECHET, Florent, 33700 MERIGNAC (FR); BOTA, Valery, 33700 50108 MERIGNAC (FR)
(74) Mandataire: Lavoix

(56) Documents cités:
- EP-A2- 1 705 091
- DE-A1-102015 213 592
- US-A1- 2015 353 204

## Description

La présente invention concerne le domaine des systèmes d'affichage pour poste de pilotage de véhicule, par exemple pour poste de pilotage d'aéronef.

Dans les systèmes d'affichage pour poste de pilotage d'aéronef, une tendance actuelle est de prévoir des écrans d'affichage d'image tactiles et d'augmenter la taille de ces écrans d'affichage, afin de permettre l'affichage d'un grand nombre d'informations tout en conservant la lisibilité de ces informations.

Cependant, le simple remplacement d'écrans d'affichage existants par des écrans d'affichage d'image tactiles plus grands conduit à des problèmes d'agencement des écrans d'affichage et d'ergonomie du poste de pilotage, notamment pour les postes de pilotage pour deux pilotes qui sont configurés pour être utilisés par deux pilotes assis côte-à-côte et partageant en partie le même système d'affichage.

En outre, les systèmes d'affichage pour poste de pilotage d'aéronef doivent respecter des normes en termes d'espace disponible pour chaque pilote, d'accessibilité des différentes fonctions pour chaque pilote, de pénibilité pour l'accès visuel et tactile aux différentes fonctions pour chaque pilote et de visibilité vers l'extérieur, le système d'affichage ne devant pas entraver la vision nécessaire du pilote ou des pilotes vers l'extérieur de l'aéronef. Les angles de vision requis sont généralement plus importants au sol (décollage, atterrissage et roulage) qu'en vol. Les détails peuvent être trouvés notamment dans la norme SAE ARP4101/2 « Pilot Visibility From The Flight Deck ».

DE102015213592A1 et US2015/0353204A1 divulguent chacun un poste de pilotage de véhicule comprenant un écran d'affichage possédant une surface d'affichage tridimensionnelle concave.

EP1705091A2 divulgue un ensemble de pilotage de véhicule ferroviaire comprenant deux postes de pilotage situés côte-à-côte.

Un des buts de l'invention est de proposer un système d'affichage pour poste de pilotage de véhicule qui permette de maximiser la surface d'affichage pour y afficher potentiellement un plus grand nombre d'informations et/ou pour y afficher les informations en plus grandes dimensions pour une meilleure lisibilité ou pour le confort d'usage, tout en étant ergonomique.

A cet effet, l'invention propose un système d'affichage selon la revendication 1. Des caractéristiques optionnelles sont définies aux revendications 2 à 17.

L'invention concerne également un poste de pilotage selon la revendication 18.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique en perspective d'un poste de pilotage individuel comprenant un système d'affichage électronique d'image ;
- la Figure 2 est une vue schématique de face du système d'affichage de la Figure 1;
- la Figure 3 est une vue schématique du système d'affichage de la Figure 1, selon III sur la Figure 2 :
- la Figure 4 est une vue schématique en coupe du système d'affichage des Figures 1 et 2 selon IV-IV sur la Figure 2
- la Figure 5 est une vue schématique en perspective d'un poste de pilotage pour deux pilotes, comprenant un système d'affichage électronique d'image ;
- la Figure 6 est une vue schématique de face du système d'affichage du poste de pilotage de la Figure 5 ; et
- la Figure 7 est une vue schématique du système d'affichage du poste de pilotage des Figures 5 et 6, selon VII sur la Figure 6

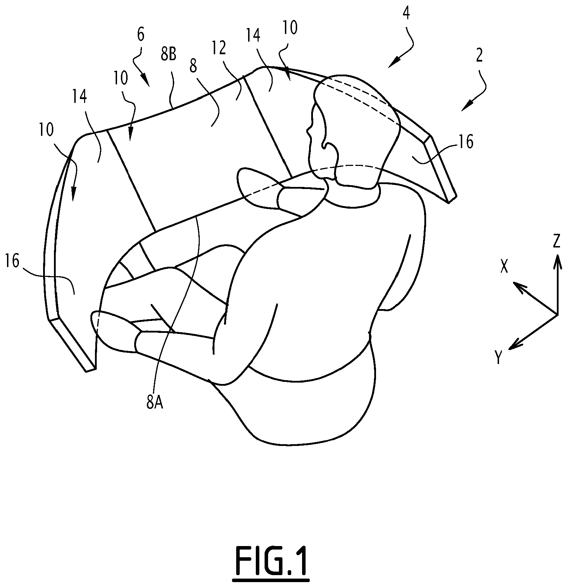

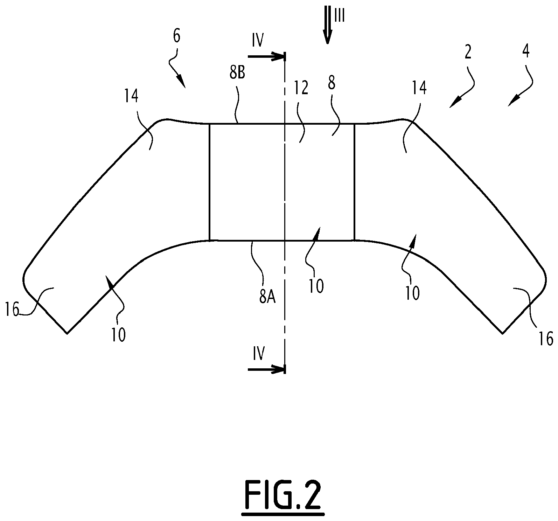

En référence aux Figures 1 à 3, le poste de pilotage 2 est un poste de pilotage de véhicule, par exemple un poste de pilotage d'un aéronef 4. L'aéronef 4 est par exemple un avion, un drone (i.e. un aéronef sans pilote humain à bord) ou un hélicoptère.

Dans une variante, le poste de pilotage 2 est un poste de pilotage d'un véhicule ferroviaire, d'un véhicule maritime, par exemple un bâtiment de surface ou un sous-marin, ou d'un véhicule routier, par exemple une voiture ou un camion.

Le poste de pilotage 2 est situé dans le véhicule ou situé hors du véhicule et configuré pour le pilotage du véhicule à distance, comme par exemple dans le cas du drone.

Le poste de pilotage 2 est par exemple prévu pour un pilote ou pour deux pilotes côte à côte. Sur les Figures 1 à 4, il s'agit d'un poste de pilotage individuel, i.e. pour un seul pilote (ou poste de pilotage mono-pilote).

Dans la suite de la description, les termes « longitudinal », « transversal », « horizontal », « vertical », « avant », « arrière », « gauche », « droite » « haut » et « bas » s'entendent par référence au point du vu d'un pilote installé au poste de pilotage 2, par rapport au repère orthogonal illustré sur les Figures 1 à 3 et comprenant :
- un axe longitudinal X orienté de l'arrière vers l'avant ;
- un axe transversal Y orienté de la droite vers la gauche ; et
- un axe vertical Z orienté du bas vers le haut.

Le poste de pilotage 2 comprend un système d'affichage électronique d'image 6 configuré pour l'affichage d'images. Le système d'affichage 6 est utilisable pour l'affichage de données de pilotage du véhicule.

Dans le cas d'un aéronef, le système d'affichage 6 est par exemple configuré pour l'affichage de données telles que celles de pilotage, de navigation ou représentant l'état des systèmes (moteurs, hydraulique, électrique,...).

Le système d'affichage 6 possède une surface d'affichage d'image 8 qui est de forme tridimensionnelle et courbe. La surface d'affichage 8 est dépourvue de cassure formant un angle rentrant, un angle sortant ou une arête.

La surface d'affichage 8 est définie par un seul écran d'affichage électronique d'images 10 ou plusieurs écrans d'affichage électronique d'images 10 jointifs.

Dans un exemple de réalisation, chaque écran d'affichage 10 est par exemple un écran électroluminescent, par exemple un écran à diodes électroluminescentes (ou LED pour « *Light Emitting Diode* » en anglais), en particulier un écran à diodes électroluminescentes organiques (ou OLED pour « *Organic Light Emitting Diode* » en anglais).

Dans un exemple de réalisation, permettant notamment l'absence de bordure visible, chaque écran 10 est un écran à micro-diodes électroluminescentes (ou écran micro-LED). De manière connue, les diodes électroluminescentes d'un écran micro-LED génère de la lumière à partir d'un matériau inorganique.

Dans un autre exemple de réalisation chaque écran d'affichage 10 met en œuvre une technologie plus classique à cristaux liquides ou LCD pour « *Liquid Crystal Display »* en anglais.

Dans un exemple de réalisation, chaque écran d'affichage 10 est dépourvu de bordure visible de telle sorte que l'ensemble de la surface d'affichage 8 parait continue pour l'utilisateur. De tels écrans d'affichage 10 dépourvus de bordure visible sont par exemple des écrans à micro-LED.

De préférence, la surface d'affichage 8 est au moins en partie tactile, et en particulier entièrement tactile. Pour ce faire, par exemple au moins un des écrans d'affichage 10 est tactile, et, en particulier, chaque écran d'affichage 10 est tactile.

De préférence, lorsque plusieurs écrans d'affichage 10 sont utilisés, ils sont jointifs et possèdent à leur(s) jonction(s) une transition de courbure continue de telle sorte que la réalisation de gestes tactiles d'un écran d'affichage 10 à l'autre se fasse de manière continue et que des objets graphiques puissent être affichés à cheval sur plusieurs écrans d'affichage 10.

Le caractère tactile de la surface d'affichage 8 permet à chaque pilote d'interagir avec le système d'affichage 6, par exemple pour configurer l'affichage des données sur la surface d'affichage 8 et/ou pour interagir avec et/ou commander des systèmes embarqués du véhicule, tels que des pompes hydrauliques, des relais électriques, des éclairages...

Le système d'affichage 6 est configuré pour être placé devant le ou les pilote(s).

La surface d'affichage 8 s'étend généralement transversalement devant le(s) pilote(s), éventuellement avec des extensions latérales qui reviennent vers l'arrière, de façon à conférer à la surface d'affichage 8 une forme enveloppante par rapport au(x) pilote(s).

La surface d'affichage 8 présente un bord inférieur 8A et un bord supérieur 8B.

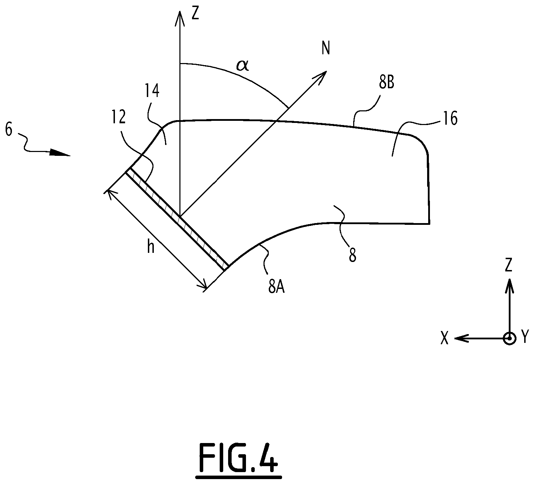

Par la suite, la « hauteur » h (Figure 4) de la surface d'affichage 8 en un point quelconque du bord inférieur 8A de la surface d'affichage 8 désigne la distance entre le bord inférieur 8A et le bord supérieur 8B de la surface d'affichage 8 prise suivant la perpendiculaire au bord inférieur 8A au point considéré du bord inférieur 8A.

La surface d'affichage 8 est de préférence globalement inclinée de manière à ce qu'en tout point de la surface d'affichage 8, la normale N (Figure 4) à la surface d'affichage 8 soit orientée vers le haut et vers l'arrière. Ceci permet de placer la surface d'affichage 8 devant le(s) pilote(s) sous un pare-brise du poste de pilotage 2.

Ainsi, chaque pilote peut regarder à l'extérieur du véhicule à travers le pare-brise en regardant horizontalement devant lui, et regarder la surface d'affichage 8 en regardant devant lui et vers le bas.

L'inclinaison de la surface d'affichage 8 permet également de se servir de la surface d'affichage 8 comme d'un appui pour la réalisation de gestes tactiles.

Un compromis doit être trouvé entre une inclinaison importante qui facilite l'interaction tactile, le besoin de référence verticale, notamment pour le pilotage, et la minimisation de la fatigue oculaire et/ou physique pour les pilotes.

Selon l'invention, l'inclinaison de la surface d'affichage 8 est comprise entre 30 et 55° en tout point de la surface d'affichage 8.

L'inclinaison de la surface d'affichage 8 en un point quelconque de la surface d'affichage 8 est déterminée comme l'angle α (Figure 4) défini entre la normale N à la surface d'affichage 8 en ce point et la verticale Z.

Du fait de l'inclinaison de la surface d'affichage 8, le bord inférieur 8A est horizontalement plus proche de chaque pilote que le bord supérieur 8B.

La surface d'affichage 8 comprend au moins une zone principale 12, chaque zone principale 12 étant dédiée à un pilote et destinée à être située devant ce pilote.

Le poste de pilotage 2 des Figures 1 à 4 est prévu pour un seul pilote, et la surface d'affichage 8 comprend une seule zone principale 12 dédiée à ce pilote.

La surface d'affichage 8 comprend au moins une zone latérale 14 associée à chaque zone principale 12, chaque zone latérale 14 prolongeant latéralement la zone principale 12 associée.

La surface d'affichage 8 des Figures 1 à 4 comprend ici deux zones latérales 14 prolongeant chacune la zone principale 12 latéralement d'un côté respectif, l'une vers la droite, et l'autre vers la gauche.

La zone principale 12 est sensiblement plane ou courbe, en particulier concave.

Ceci permet au pilote d'avoir une bonne visibilité et accessibilité tactile sur l'ensemble de la zone principale 12 située devant lui, en particulier compte tenu de l'étendue de la zone principale 12 dans le sens transversal, i.e. dans le sens de la largeur de la surface d'affichage 8.

L'étendue de la zone principale 12 dans le sens de la largeur est par exemple comprise entre 30 cm et 60 cm. Elle correspond à la distance entre les deux coudes de l'utilisateur au repos.

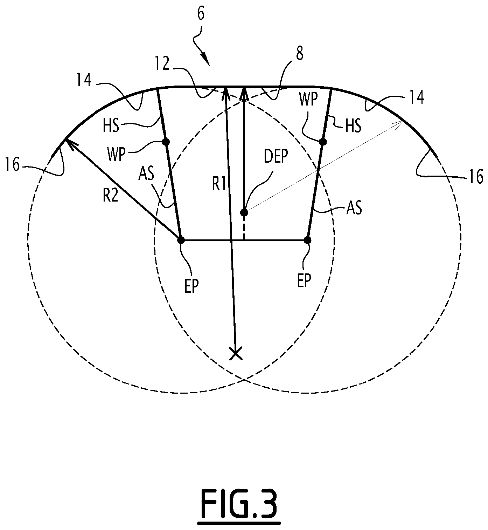

De préférence, en tout point de la zone principale 12, le rayon de courbure R1 (Figure 3) de la surface d'affichage 8 est supérieur à 1500 mm. La zone principale 12 peut présenter une courbure dans le sens de la largeur (i.e. lorsque l'on se déplace sur la surface d'affichage de la droite vers la gauche ou inversement) et/ou présenter une courbure dans le sens de la hauteur (i.e. lorsque l'on se déplace sur la surface d'affichage du bas vers le haut ou inversement).

De préférence, la zone principale 12 est courbe dans le sens de la largeur (lorsque l'on parcourt la zone principale transversalement, de la droite vers la gauche ou inversement).

Dans un exemple de réalisation, et tel qu'illustré sur les Figures 1 à 4, la zone principale 12 est courbe dans le sens de la largeur (en se déplaçant de droite à gauche ou inversement) mais n'est pas courbe dans le sens de la hauteur (en se déplaçant du bas vers le haut ou inversement).

Dans ce cas, la section de la zone principale 12 dans un plan vertical et longitudinal quelconque passant par la zone principale 12 est sensiblement rectiligne, comme illustré sur la Figure 4 sur laquelle le plan de coupe est un plan vertical et longitudinal passant au milieu de la zone principale 12.

De préférence, la courbure dans le sens de la largeur de la surface d'affichage 8 augmente en se déplaçant depuis le milieu de la zone principale 12 vers la ou chaque zone latérale 14 prolongeant latéralement la zone principale 12. La courbure suit ainsi le mouvement naturel des mains lorsqu'elles se déplacent vers l'extérieur.

Dans un exemple de réalisation, la zone principale 12 présente une courbure dans le sens de la largeur sensiblement constante, et la courbure dans le sens de la largeur de la surface d'affichage 8 augmente dans chaque zone latérale 14 adjacente à la zone principale 12.

Dans ce cas chaque zone latérale 14 adjacente à la zone principale 12 présente une courbure dans le sens de la largeur plus importante que celle de la zone principale 12.

Dans une variante, la zone principale 12 présente une courbure dans le sens de la largeur qui est variable, et qui augmente depuis le milieu de la zone principale 12 vers la ou chaque zone latérale 14 adjacente à la zone principale 12.

Dans un exemple de réalisation, la zone principale 12 présente une courbure dans le sens de la largeur qui est constante dans une région de courbure constante située autour du milieu de la zone principale 12, et qui augmente entre la région de courbure constante et chaque zone latérale 14 adjacente à la zone principale 12.

Dans une variante, la courbure dans le sens de la largeur de la zone principale 12 augmente constamment à partir du milieu de la zone principale 12 en se déplaçant vers chaque zone latérale 14 adjacente à la zone principale.

De préférence, dans les différents exemples et variantes décrits ci-dessus, dans chaque zone latérale 14, le rayon de courbure R2 (Figure 3) de la surface d'affichage 8 dans le sens de la largeur est inférieur à 1000 mm et typiquement supérieur à 400 mm.

La surface d'affichage 8 comprend en option au moins une extension latérale 16 prolongeant une zone latérale 14 correspondante latéralement vers l'extérieur, i.e. à l'opposé de la zone principale 12 associée, chaque extension latérale 16 s'étendant obliquement vers l'extérieur et vers l'arrière à partir de la zone latérale 16 correspondante.

Ainsi, la surface d'affichage présente une forme enveloppante, chaque extension latérale 16 revenant vers l'arrière sur le côté du pilote.

Chaque extension latérale 16 est par exemple configurée pour s'étendre sous une vitre latérale du poste de pilotage 2.

La surface d'affichage 8 du poste de pilotage des Figures 1 à 4 comprend deux extensions latérales 16, chacune prolongeant une zone latérale 14 respective.

Chaque extension latérale 16 présente une hauteur qui diminue progressivement depuis la zone latérale 14 associée vers l'extrémité libre de l'extension latérale 14 opposée à la zone latérale 14 associée.

Ceci permet d'une part favoriser la vision vers l'extérieur au-dessus du système d'affichage 6 et permettre le positionnement de moyens de contrôle (« fligth controls » en anglais) comme des mini-manches ou une manette des gaz à proximité de la partie basse du système d'affichage 6.

Avantageusement, en variante ou en option, le bord supérieur 8B de la surface d'affichage 8 descend progressivement le long de chaque extension latérale 16 lorsque l'on se déplace vers l'extrémité libre de l'extension latérale 16.

Ceci permet de dégager la visibilité sur les côtés pour le pilote.

Avantageusement, en variante ou en option, le bord inférieur 8A de la surface d'affichage A descend progressivement le long de chaque extension latérale 16 lorsque l'on se déplace vers l'extrémité libre de l'extension latérale 16.

Ceci permet de maintenir une hauteur suffisante pour l'extension latérale 16, permettant l'affichage d'images de manière lisible, tout en laissant la place disponible nécessaire sous le système d'affichage 6, par exemple pour des manettes de commandes ou des leviers de commande (par exemple la manette des gaz).

Chaque extension latérale 16 présente par exemple une hauteur qui diminue progressivement de la zone latérale 14 associée vers une extrémité libre de l'extension latérale 16 opposée à la zone latérale 14 associée.

Dans un exemple de réalisation, chaque extension latérale 16 présente une courbure similaire à celle de la zone 14 dans le sens de la largeur et/ou dans le sens de la hauteur. Ceci est plus favorable à l'ergonomie du poste de pilotage 2.

Dans la zone principale 12, le bord inférieur 8A doit permettre le passage des genoux de chaque pilote sous le système d'affichage 6 de manière à ce que chaque pilote soit suffisamment proche de la surface d'affichage 8 pour faciliter les interactions tactiles.

En considérant la surface d'affichage 8 dans son ensemble, le bord supérieur 8B et le bord inférieur 8A de la surface d'affichage 8 sont de préférence courbes, tout en pouvant présenter des portions rectilignes et des portions courbes s'étendant dans le prolongement les unes des autres.

Le bord supérieur 8B et/ou le bord inférieur 8A de la surface d'affichage 8 sont par exemple sensiblement rectilignes le long de chaque extension latérale 16.

Comme illustré sur les Figures 1 à 4, le bord supérieur 8B et le bord inférieur 8A de la surface d'affichage 8 sont sensiblement rectilignes le long de chaque extension latérale 16.

Chaque zone latérale 14 forme par exemple une transition entre la zone principale 12 associée et une extension latérale 16 associée, entre lesquelles la zone latérale 14 est située.

Dans l'exemple illustré, le bord supérieur 8B et le bord inférieur 8A de la surface d'affichage 8 sont courbés au niveau de chaque zone latérale 14 pour assurer la continuité entre la zone principale 12 et l'extension latérale 16 correspondante.

Plus particulièrement, le bord supérieur 8B et le bord inférieur 8A de la surface s'affichage 8 s'étendent par exemple sensiblement transversalement et horizontalement le long de la zone principale 12, obliquement vers l'arrière et vers le bas le long de chaque extension latérale 16, le bord supérieur 8B et le bord inférieur 8A de la surface s'affichage 8 formant des courbes de raccordement le long de chaque zone latérale 14.

Comme illustré sur la Figure 3, un pilote peut être modélisé par un point de vision cyclopéen DEP (« *Design Eye Point* » en anglais) représentant le centre de vision du pilote, deux points de coude EP fixes représentant les coudes du pilote, deux points de poignet WP représentant les poignets du pilotes, deux segments d'avant-bras AS modélisant les avant-bras du pilote, chaque segment d'avant-bras AS s'étendant d'un point de coude EP à un point de poignet WP, et deux segments de main HS représentant les mains du pilotes, chaque segment de main HS s'étendant à partir d'un point de poignet WP. Les deux points de coude EP sont espacés transversalement.

En considérant les mains fixes par rapports aux avants bras et alignées avec les avants bras, et en considérant que chaque avant-bras pivote autour du point de coude EP associé, l'extrémité libre de chaque main d'écrit un cercle centré sur le point de coude EP associé, les centres des deux cercles étant décalés transversalement de la distance séparant les deux points de coude EP.

Un tel déplacement des mains est considéré comme minimisant les efforts pour le pilote.

La surface d'affichage 8 comprenant la zone principale 12 sensiblement plane ou présentant une courbure dans le sens de la largeur faible, prolongée latéralement par les zones latérales 14 présentant une courbure dans le sens de la largeur plus prononcée que celle de la zone principale 12, permet d'obtenir un affichage permettant une bonne visibilité tout en ayant une bonne ergonomie.

En effet, la zone principale 12 sensiblement plane ou faiblement courbée dans le sens de la largeur permet au pilote d'avoir une bonne vision des images affichées dans cette zone, et chaque zone latérale 14 plus courbée permet au pilote d'avoir une bonne vision en tournant les yeux et/ou la tête vers cette zone latérale 14, la vision s'effectuant sensiblement suivant la normale de la portion de la zone latérale 14 regardée par le pilote, et non obliquement comme cela serait le cas avec un écran latéral qui serait plat en sensiblement coplanaire avec un écran central également plat.

En outre, la forme de la surface d'affichage 8 dans le sens de la largeur épouse sensiblement les deux cercles décrits par les extrémités des mains du modèle de pilote.

Ainsi, la surface d'affichage 8 permet de minimiser les efforts nécessaires au pilote pour interagir avec la surface d'affichage 8, et donc d'améliorer l'ergonomie du poste de pilotage 2.

Les extensions latérales 16 prolongeant les zones latérales 14 permettent d'augmenter l'aire de la surface d'affichage 8 avec une bonne visibilité et une bonne ergonomie.

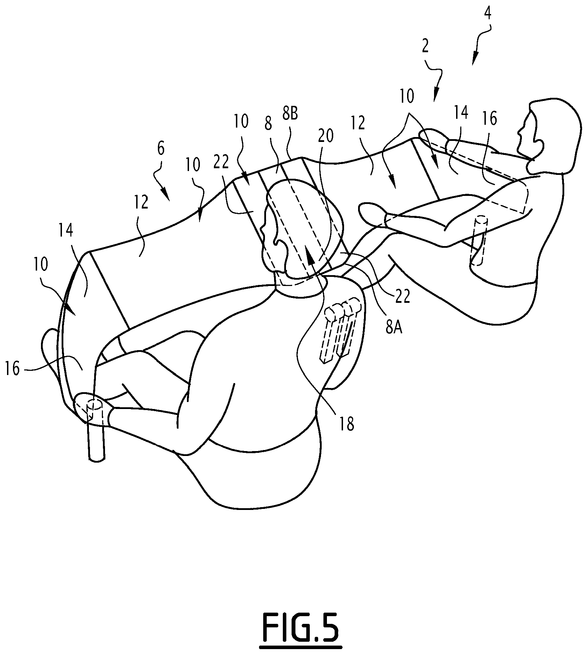

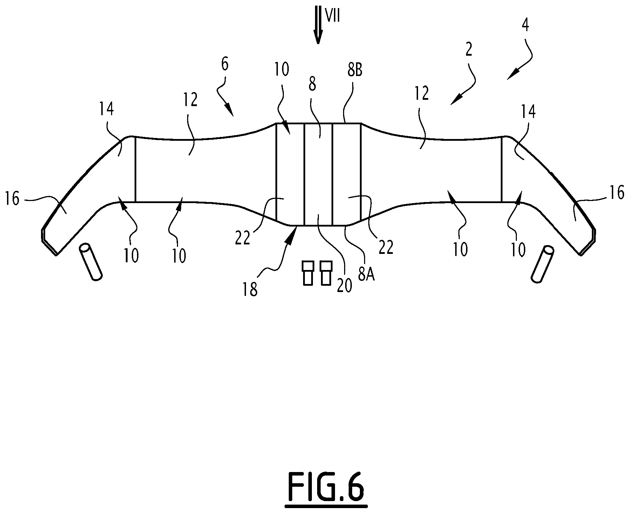

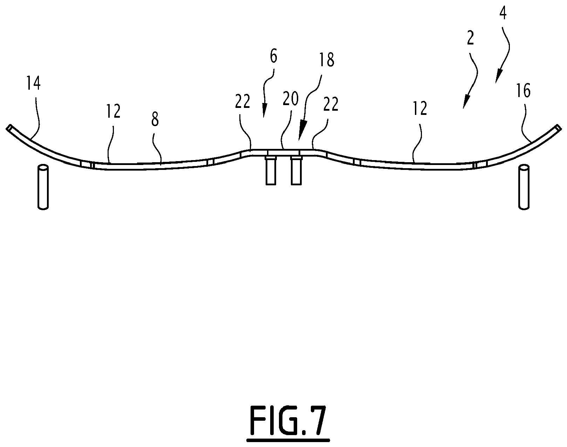

Le poste de pilotage 2 des Figures 5 à 7 diffère de celui des Figures 1 à 4 en ce qu'il est configuré pour deux pilotes assis l'un à côté de l'autre. Les références numériques aux éléments semblables sont conservées.

La surface d'affichage 8 comprend deux zones principales 12 chacune dédiée à un pilote respectif, deux zones latérales 14, chacune des deux zones latérales 14 prolongeant une zone principale 12 respective vers l'extérieur, i.e. du côté opposé à l'autre zone principale 12, et une zone centrale 18 située entre les deux zones principales 12.

La surface d'affichage 8 comprend par exemple deux extrémités latérales 16, chaque extrémité latérale 16 prolongeant latéralement une zone latérale 14 respective, en s'étendant obliquement vers l'extérieur et vers l'arrière.

La surface d'affichage 8 est tridimensionnelle et courbe.

Chaque zone principale 12 est sensiblement plane ou faiblement courbée dans le sens de la largeur, en présentant de préférence un rayon de courbure supérieur ou égal à 1500 mm.

La zone centrale 18 est une zone d'affichage partagée par les deux pilotes.

La zone centrale 18 s'étend entre les deux zones principales 12 en les reliant.

La zone centrale 18 est surélevée par rapport aux zones principales 12. La zone centrale 18 est décalée vers le haut et vers l'arrière par rapport à chacune des deux zones principales 12. La zone centrale 18 fait saillie vers le haut et vers l'arrière par rapport aux zones principales 12. La zone centrale 18 forme une ondulation saillante au centre de la surface d'affichage 8. Ceci permet une accessibilité tactile et une visibilité de la zone centrale 18 améliorée pour les deux pilotes. La zone centrale 18 peut ainsi servir de zone d'affichage partagée pour les deux pilotes.

De préférence, la zone centrale 18 et les deux zones principales 12 sont orientées sensiblement dans la même direction. Plus spécifiquement, la normale au centre de la zone centrale 18 et la normale au centre de chaque zone principale 12 sont orientées dans une même direction oblique, orientée vers le haut et vers l'arrière.

La surface d'affichage 8 est sensiblement symétrique par rapport à un plan médian vertical et longitudinal.

Chaque zone principale 12 et chaque zone latérale 14 associée sont configurées sensiblement de la même manière que sur les Figures 1 à 3.

Ainsi, la surface d'affichage 8 présente une courbure dans le sens de la largeur qui augmente lorsque l'on se déplace depuis le centre de chaque zone principale 12 vers la zone latérale 14 associée.

Chaque zone principale 12 a une courbure constante ou variable, en particulier augmentant progressivement depuis le centre de la zone principale 12 vers la zone latérale 14 associée.

Chaque zone principale 12 se raccorde, du côté opposé à la zone latérale 14 associée, à la zone centrale 18, avec une continuité de surface.

La zone centrale 18 possède une région centrale 20 située entre deux régions latérales 22, chaque région latérale 22 s'étendant entre la région centrale 20 et une zone principale 12 respective.

Dans l'exemple illustré, chaque région latérale 22 est convexe.

La région centrale 20 est sensiblement plane ou légèrement convexe. Lorsque la région centrale 20 est convexe, son rayon de courbure est de préférence supérieur à 1500 mm. Ceci permet une bonne visibilité de la région centrale 20 par les deux pilotes.

En option, la zone centrale 18 présente une hauteur maximale strictement supérieure à la hauteur maximale de chacune des zones principales 12. Ceci permet d'augmenter l'aire de la surface d'affichage 8 sans entraver la visibilité vers l'avant de chaque pilote vers l'extérieur. Les normes de certification exigent en effet un angle de vue vers le bas plus important quand le pilote regarde en face de lui que quand il regarde sur les côtés (voir par exemple la recommandation ARP4101/2).

De préférence, la hauteur de la surface d'affichage 8 augmente progressivement lorsque l'on se déplace de chaque zone principale 12 vers la zone centrale 18.

Avantageusement, la zone centrale 18 déborde par rapport à chaque zone principale 12 vers le haut et/ou vers le bas.

La zone centrale 18 déborde ici par rapport à chaque zone principale 12 vers le haut et vers le bas. La surface d'affichage 8 s'agrandie vers le haut et vers le bas à partir de chaque zone principale 12 et en direction de la zone centrale 18.

Ceci permet un accroissement de l'aire de la surface d'affichage 8.

En option ou en variante, la surface d'affichage 8 présente, sur son bord supérieur 8B, au niveau de chaque zone latérale 14, une excroissance en saillie vers le haut.

En se déplaçant d'une zone principale 12 vers la zone latérale 14 associée, le bord supérieur 8B de la surface d'affichage 8 remonte progressivement, avant de redescendre le long de la zone latérale 14, et éventuellement de l'extension latérale 16 prolongeant la zone latérale 14.

Cette excroissance permet d'augmenter la surface d'affichage sans entraver la vision vers l'extérieur, dans une zone correspondant par exemple à un montant de pare-brise.

Le système d'affichage 6 pour deux pilotes permet de bénéficier d'une grande surface d'affichage 8 de forme tridimensionnelle et courbe assurant une bonne visibilité et une bonne accessibilité tactile pour chaque pilote.

La surface d'affichage 8 permet en particulier de disposer de zones dédiées à un pilote qui sont utilisable en minimisant les efforts pour le pilote. Elle permet en outre un partage d'information facile, avec la zone centrale 18 qui peut être utilisée facilement par les deux pilotes, et également la zone latérale 14 et le cas échéant l'extension latérale 16 d'un pilote, qui sont visibles pour l'autre pilote du fait de leur orientation.

En effet, du fait de la courbure de la surface d'affichage 8, chaque zone latérale 12, et le cas échéant l'extension latérale 16 associée, est plus tournée vers l'autre pilote que la zone principale.

La surface d'affichage 8 formée d'un écran d'affichage ou de plusieurs écrans d'affichage jointifs et sensiblement continue.

Ceci permet d'autoriser chaque pilote à paramétrer l'affichage d'image sur la surface d'affichage 8 en positionnant chaque image affichée par la surface d'affichage, par exemple en déplaçant une fenêtre correspondante.

Ainsi, un pilote souhaitant partager avec l'autre pilote une information contenue dans une image, peut par exemple faire glisser cette image vers la zone centrale 18 pour permettre à l'autre pilote de voir facilement cette information.

De préférence, la surface d'affichage 8 dans son ensemble est une surface développable.

En particulier dans le cadre de technologie d'écran d'affichage du type LCD ou OLED, la mise en œuvre d'une surface développable permet de réaliser une fabrication à plat des composant de chaque écran d'affichage et de les courber au moment de l'assemblage pour obtenir la forme souhaitée. La fabrication des composants à plat simplifie le processus industriel et réduit les coûts associés.

La surface d'affichage 8 développable est formée d'une infinité de droites appelées génératrices, le plan tangent à la surface d'affichage 8 étant le même en tout point de la génératrice.

Les génératrices de la surface d'affichage 8 s'étendent par exemple sensiblement suivant la hauteur de la surface d'affichage 8. Ainsi, la surface d'affichage 8 n'est pas courbée dans le sens de la hauteur mais est courbée dans le sens de la largeur.

Ceci s'applique de manière générale, et en particulier aux différents exemples de réalisation décrits ci-dessus.

En particulier aucune zone parmi la zone principale 12, chaque zone latérale 14 et, le cas échéant, chaque extension latérale 16 et la zone centrale 18 de la surface d'affichage n'est pas courbée dans le sens de la hauteur, la zone principale 12 étant sensiblement plane ou courbée dans le sens de la largeur, chaque zone latérale 14 étant courbée dans le sens de la largeur. En option, le cas échéant, chaque extension latérale 16 peut être courbée dans le sens de la largeur et/ou la zone centrale 18 peut être courbée dans le sens de la largeur.

Comme indiqué plus haut, la surface d'affichage 8 est formée d'un écran d'affichage 10 ou de plusieurs écrans d'affichage 10 jointifs.

En revenant aux Figures 1 à 4, la surface d'affichage 8 est par exemple formée d'un écran d'affichage 10 principal, correspondant à la zone principale 12 et de deux écrans d'affichage 10 latéraux, chaque écran d'affichage 10 latéral définissant une zone latérale 14 respective, et aussi, le cas échéant une extension latérale 16 associée.

Ceci permet de fabriquer séparément l'écran d'affichage 10 central, dont la géométrie est plus simple, et les écrans d'affichage 10 latéraux, dont la géométrie est plus compliquée.

En revenant aux Figures 5 à 7, la surface d'affichage 8 est par exemple formée de deux écrans d'affichage 10 principaux définissant chacune une zone principale 12 respective, de deux écrans d'affichage 10 latéraux, définissant chacun une zone latérale 14 respective et éventuellement une extension latérale 16 associée, et d'un écran d'affichage 10 central définissant la zone centrale 18.

Dans les différents exemples de réalisation, avantageusement, chaque écran d'affichage s'étend suivant une portion de surface développée, avec les avantages associés indiqués ci-dessus.

## Revendications

1. Système d'affichage électronique d'images pour poste de pilotage de véhicule, par exemple d'aéronef, le système d'affichage possédant une surface d'affichage (8) tridimensionnelle et courbe formée d'un seul écran d'affichage (10) électronique ou de plusieurs écrans d'affichage (10) électroniques jointifs, la surface d'affichage (8) possédant au moins une zone principale (12) dédiée à un pilote et destinée à être située devant ce pilote, la zone principale (12) étant sensiblement plane ou concave, et au moins une zone latérale (14) associée à chaque zone principale (12), chaque zone latérale (14) étant concave et prolongeant latéralement la zone principale (12) associée, **caractérisé en ce que** l'inclinaison de la surface d'affichage (8) est comprise entre 30° et 55° en tout point de la surface d'affichage (8).

2. Système d'affichage selon la revendication 1, dans lequel, en tout point de la zone principale (12), le rayon de courbure de la surface d'affichage (8), dans le sens de la largeur de la surface d'affichage, est supérieur à 1500 mm.

3. Système d'affichage selon l'une quelconque des revendications précédentes, dans lequel la hauteur de chaque zone principale (12) est comprise entre 150 et 400 mm.

4. Système d'affichage selon l'une quelconque des revendications précédentes, dans lequel le rayon de courbure de la surface d'affichage (8), dans le sens de la largeur de la surface d'affichage, est inférieur à 1000 mm, dans chaque zone latérale (14).

5. Système d'affichage selon l'une quelconque des revendications précédentes, dans lequel le rayon de courbure de la surface d'affichage (8), dans le sens de la largeur de la surface d'affichage, est supérieur à 400 mm, dans chaque zone latérale (14).

6. Système d'affichage selon l'une quelconque des revendications précédentes, dans lequel la hauteur de chaque zone latérale (14) est comprise entre 150 et 400 mm.

7. Système d'affichage selon l'une quelconque des revendications précédentes, dans lequel chaque zone latérale (14) possède une courbure, dans le sens de la largeur de la surface d'affichage, strictement supérieure à celle de la zone principale (12) associée.

8. Système d'affichage selon l'une quelconque des revendications précédentes, comprenant une seule zone principale (12) et deux zones latérales (14) associées la zone principale (12), chaque zone latérale (14) prolongeant latéralement la zone principale (14) d'un côté respectif.

9. Système d'affichage selon l'une quelconque des revendications précédentes, comprenant deux zones principales (12) chacune dédiée à un pilote respectif, une zone latérale (14) associée à chaque zone principale (12) et prolongeant cette zone principale (12) du côté opposé à l'autre zone principale (12), et une zone centrale (18) située entre les deux zones principales (12).

10. Système d'affichage selon la revendication 9, dans lequel la zone centrale (18) comprend une région centrale (20) située entre deux régions latérales (22), chaque région latérale (22) s'étendant entre la région centrale (20) et une zone principale (12) respective.

11. Système d'affichage selon la revendication 10, dans lequel la région centrale (18) est convexe ou plane et/ou chaque région latérale (22) est convexe.

12. Système d'affichage selon l'une quelconque des revendications 9 à 11, dans lequel la zone centrale (18) présente une hauteur maximale strictement supérieure à une hauteur maximale de chaque zone principale (12).

13. Système d'affichage selon l'une quelconque des revendications 9 à 12, dans lequel la hauteur de la surface d'affichage (8) augmente progressivement lorsque l'on se déplace de chaque zone principale (12) vers la région centrale (18).

14. Système d'affichage selon l'une quelconque des revendications 9 à 13, dans lequel la zone centrale (18) déborde par rapport à chaque zone principale (12) vers le haut et/ou vers le bas.

15. Système d'affichage selon l'une quelconque des revendications précédentes, dans lequel le bord supérieur (8B) de la surface d'affichage est courbe et/ou le bord inférieur (8A) de la surface d'affichage est courbe ou rectiligne.

16. Système d'affichage selon l'une quelconque des revendications précédentes, dans lequel chaque zone latérale (14) est prolongée par une extension latérale (16) s'étendant obliquement sur le côté et vers l'arrière à partir de la zone latérale (14).

17. Système d'affichage selon la revendication 16, dans lequel chaque extension latérale (16) présente une hauteur progressivement décroissante vers son extrémité opposée à la zone latérale (14) associée.

18. Véhicule, par exemple aéronef, comprenant un poste de pilotage (2) muni d'un système d'affichage selon l'une quelconque des revendications précédentes.

## Patentansprüche

1. Elektronisches Bildanzeigesystem für eine Cockpit eines Fahrzeugs, z. B. eines Flugzeugs, wobei das Anzeigesystem eine dreidimensionale und gekrümmte Anzeigefläche (8) besitzt, die aus einem einzigen elektronischen Anzeigeschirm (10) oder aus mehreren aneinandergrenzenden elektronischen Anzeigeschirmen (10) gebildet ist, die Anzeigefläche (8) mindestens einen Hauptbereich (12) besitzt, der einem Piloten gewidmet ist und dazu bestimmt ist, sich vor diesem Piloten zu befinden, wobei der Hauptbereich (12) im Wesentlichen eben oder konkav ist, und mindestens einen Seitenbereich (14), der mit jedem Hauptbereich (12) assoziiert ist, wobei jeder Seitenbereich (14) konkav ist und den assoziierten Hauptbereich (12) seitlich verlängert, **dadurch gekennzeichnet, dass**
die Neigung der Anzeigefläche (8) an jedem Punkt der Anzeigefläche (8) zwischen 30° und 55° liegt.

2. Anzeigesystem nach Anspruch 1, wobei an jedem Punkt des Hauptbereichs (12) der Krümmungsradius der Anzeigefläche (8) in Richtung der Breite der Anzeigefläche größer als 1500 mm ist.

3. Anzeigesystem nach einem der vorherigen Ansprüche, wobei die Höhe jedes Hauptbereichs (12) zwischen 150 und 400 mm liegt.

4. Anzeigesystem nach einem der vorherigen Ansprüche, wobei der Krümmungsradius der Anzeigefläche (8) in Richtung der Breite der Anzeigefläche in jedem Seitenbereich (14) weniger als 1000 mm ist.

5. Anzeigesystem nach einem der vorherigen Ansprüche, wobei der Krümmungsradius der Anzeigefläche (8) in Richtung der Breite der Anzeigefläche in jedem Seitenbereich (14) größer als 400 mm ist.

6. Anzeigesystem nach einem der vorherigen Ansprüche, wobei die Höhe von jedem Seitenbereich (14) zwischen 150 und 400 mm liegt.

7. Anzeigesystem nach einem der vorherigen Ansprüche, wobei jeder Seitenbereich (14) eine Krümmung in Richtung der Breite der Anzeigefläche aufweist, die strikt größer ist als jene des assoziierten Hauptbereichs (12).

8. Anzeigesystem nach einem der vorherigen Ansprüche, umfassend einen einzigen Hauptbereich (12) und zwei Seitenbereiche (14), die mit dem Hauptbereich (12) assoziiert sind, wobei jeder Seitenbereich (14) den Hauptbereich (14) auf einer jeweiligen Seite seitlich verlängert.

9. Anzeigesystem nach einem der vorherigen Ansprüche, umfassend zwei Hauptbereiche (12), die jeweils einem jeweiligen Fahrer gewidmet sind, einen Seitenbereich (14), der mit jedem Hauptbereich (12) assoziiert ist und diesen Hauptbereich (12) auf der Seite gegenüber dem anderen Hauptbereich (12) verlängert, und einen mittleren Bereich (18), der sich zwischen den beiden Hauptbereichen (12) befindet.

10. Anzeigesystem nach Anspruch 9, wobei der mittlere Bereich (18) einen mittleren Bereich (20) umfasst, der sich zwischen zwei Seitenbereichen (22) befindet, wobei sich jeder Seitenbereich (22) zwischen dem mittleren Bereich (20) und einem jeweiligen Hauptbereich (12) erstreckt.

11. Anzeigesystem nach Anspruch 10, wobei der mittlere Bereich (18) konvex oder planar ist und/oder jeder Seitenbereich (22) konvex ist.

12. Anzeigesystem nach einem der Ansprüche 9 bis 11, wobei der mittlere Bereich (18) eine maximale Höhe aufweist, die strikt größer ist als eine maximale Höhe von jedem Hauptbereich (12).

13. Anzeigesystem nach einem der Ansprüche 9 bis 12, wobei die Höhe der Anzeigefläche (8) bei einer Bewegung von jedem Hauptbereich (12) zu dem mittleren Bereich (18) progressiv zunimmt.

14. Anzeigesystem nach einem der Ansprüche 9 bis 13, wobei der mittlere Bereich (18) in Bezug auf jeden Hauptbereich (12) nach oben und/oder unten hervorsteht.

15. Anzeigesystem nach einem der vorherigen Ansprüche, wobei der obere Rand (8B) der Anzeigefläche gekrümmt ist und/oder der untere Rand (8A) der Anzeigefläche gekrümmt oder geradlinig ist.

16. Anzeigesystem nach einem der vorherigen Ansprüche, wobei jeder Seitenbereich (14) durch eine seitliche Verlängerung (16) verlängert ist, die sich schräg seitlich und rückwärts von dem Seitenbereich (14) erstreckt.

17. Anzeigesystem nach Anspruch 16, wobei jede seitliche Verlängerung (16) progressiv abnehmende Höhe zu ihrem Ende gegenüber dem assoziierten Seitenbereich (14) aufweist.

18. Fahrzeug, z. B. Flugzeug, umfassend ein Cockpit (2), das mit einem Anzeigesystem nach einem der vorherigen Ansprüche versehen ist.

## Claims

1. An electronic image display system for a vehicle cockpit, for example of an aircraft, the display system having a three-dimensional and curved display surface (8) made up of a single electronic display screen (10) or several joined electronic display screens (10), the display surface (8) having at least one main zone (12) dedicated to a pilot and suitable for being located in front of said pilot, the main zone (12) being substantially planar or concave, and at least one lateral zone (14) associated with each main zone (12), each lateral zone (14) being concave and laterally extending the associated main zone (12), **characterized in that** the incline of the display surface (8) is between 30° and 55° at any point of the display surface (8).

2. The display system according to claim 1, wherein, at any point of the main zone (12), the curve radius of the display surface (8), in the direction of the width of the display surface, is greater than 1500 mm.

3. The display system according to any one of the preceding claims, wherein the height of each main zone (12) is between 150 and 400 mm.

4. The display system according to any one of the preceding claims, wherein the curve radius of the display surface (8), in the direction of the width of the display surface, is less than 1000 mm, in each lateral zone (14).

5. The display system according to any one of the preceding claims, wherein the curve radius of the display surface (8), in the direction of the width of the display surface, is greater than 400 mm, in each lateral zone (14).

6. The display system according to any one of the preceding claims, wherein the height of each lateral zone (14) is between 150 and 400 mm.

7. The display system according to any one of the preceding claims, wherein each lateral zone (14) has a curve, in the direction of the width of the display surface, strictly greater than that of the associated main zone (12).

8. The display system according to any one of the preceding claims, comprising a single main zone (12) and two lateral zones (14) associated with the main zone (12), each lateral zone (14) laterally extending the main zone (14) on a respective side.

9. The display system according to any one of the preceding claims, comprising two main zones (12) each dedicated to a respective pilot, a lateral zone (14) associated with each main zone (12) and extending this main zone (12) on the side opposite the other main zone (12), and a central zone (18) located between each of the two main zones (12).

10. The display system according to claim 9, wherein the central zone (18) comprises a central region (20) located between two lateral regions (22), each lateral region (22) extending between the central region (20) and a respective main region (12).

11. The display system according to claim 10, wherein the central region (18) is convex or planar and/or each lateral region (22) is convex.

12. The display system according to any one of claims 9 to 11, wherein the central zone (18) has a maximum height strictly greater than a maximum height of each main zone (12).

13. The display system according to any one of claims 9 to 12, wherein the height of the display surface (8) increases progressively as one moves from each main zone (12) toward the central region (18).

14. The display system according to any one of claims 9 to 13, wherein the central zone (18) overflows relative to each main zone (12) upward and/or downward.

15. The display system according to any one of the preceding claims, wherein the upper edge (8B) of the display surface is curved and/or the lower edge (8A) of the display surface is curved or straight.

16. The display system according to any one of the preceding claims, wherein each lateral zone (14) is extended by a lateral extension (16) extending obliquely on the side and toward the rear from the lateral zone (14).

17. The display system according to claim 16, wherein each lateral extension (16) has a height decreasing gradually toward its opposite end at the associated lateral zone (14).

18. A vehicle, for example an aircraft, comprising a cockpit (2) provided with a display system according to any one of the preceding claims.
